# EUROPEAN PATENT APPLICATION

(11) **EP 4 000 740 A1**
(43) Date of publication of application: **25.05.2022**
(21) Application number: 20208728.4
(22) Date of filing: 19.11.2020
(51) Int. Cl.: B04B 3/04, B04B 9/12, F16C 33/66, F16N 29/02

(54) **A METHOD OF GREASING A DECANTER CENTRIFUGE**

(71) Applicant: Alfa Laval Corporate AB, 221 00 Lund (SE)
(72) Inventor: OLSSON, Martin, 21565 Malmö (SE)
(74) Representative: Alfa Laval Attorneys

(57) **Abstract**

The present invention is related to a method of greasing a decanter centrifuge. Each bearing of the decanter centrifuge being located in a bearing housing and at least one bearing housing having a grease flow meter. The grease flow meter being connected to a control unit. The method comprising generating a greasing operation when the operating time of the decanter centrifuge is equal to or exceeds a specific time interval between greasing operations. The greasing operation includes generating a start signal in the control unit, measuring an amount of grease injected into the bearing housing by using the flow meter, and generating a stop signal in the control unit when the amount of grease injected into the bearing housing is equal to or exceeds a specific amount of grease to be injected at each greasing operation.

## Description

The present invention relates to a method of greasing a decanter centrifuge, a computer program, a computer readable medium, a control unit for controlling a greasing operation of a decanter centrifuge and a decanter centrifuge comprising the control unit.

### Introduction

The main bearings of a decanter centrifuge are typically lubricated using a semi-solid grease which is applied periodically. The main bearings of the decanter centrifuge are sensitive regarding the amount of greasing applied to the bearing housing. It is important that the correct amount of greasing is applied to avoid high temperatures in the bearing. The application of both too much greasing and to little greasing may lead to increased temperatures in the bearing, which in turn may lead to a failure. A main bearing failure may cause a significant disturbance for the user due to unwanted and unplanned production stops. The bearing life may also be shortened if the bearing is repeatedly subjected to high temperatures due to incorrect greasing.

Systems for monitoring of lubrications are known in the prior art. Document CN201423315 describes a lubrification system for a disc centrifuge utilizing an impeller on a vertical shaft of a rotor system to rotate at high speed to form a pressure difference between an oil level surface and an oil outlet, so that lubricating oil in an oil pool can be pressed to the position of an upper and lower bearings of the centrifuge, forming a lubrication oil circuit. A real-time bearing lubrication system using temperature and flow sensors in the circuit system is used for monitoring of temperature and bearing oil loss. The system can monitor the lubrication condition of the bearing in real time, ensuring that the bearing is lubricated, reduce machine operation failures, and ensure the safe operation of the machine.

Document WO 2019/197272 describes a centrifugal separator having its bearing lubricant throughflow monitored using temperature measurements evaluated by a computer. The lubrication system thus uses a recirculating oil.

Document JP 5291260 describes a centrifugal decanter having a lubricating oil supply means for continuously supplying lubricating oil to a bearing portion. It has a bearing temperature measuring means and having a control means for controlling the supply amount of the lubricating oil by the lubricating oil supply means based on the measurement result of the measuring means.

Document US 4527661 describes a rotary machine with temperature sensors and a microcomputer regulating the oil/air mixture of a lubricant sprayed on the bearing contact surfaces. No flow sensor is used.

Document US 8221001 describes a rotary machine having lubrication control unit controlling the timing and quantity of lubricant to the bearings in real time based on temperature measurements. No flow sensor is used.

Document CN 208565278 describes an oil and gas lubrication device for a horizontal spiral centrifuge having an oil pressure detection sensor or a lubricating oil flow meter or a combination of both to obtain effectual lubrication of its bearings. It also includes a thermometer for detecting the temperature of the bearing. The lubricating device supplies a mix of oil and gas., i.e. a mist.

Document CN 202052634 describes a horizontal scraper centrifuge using flow meter which may detect that the lubricating oil flow to the bearings is lower than the set value triggering an alarm. Lubricant enters from the oil inlet and exits from the oil outlet. No temperature sensor is disclosed.

Document US 2019/0187122 describes a method for detecting a bearing lubrication failure using a flow meter which can be configured to produce a signal when a movement of a predetermined quantity of the lubricant is detected.

It is the object of the present invention to provide technologies for monitoring the greasing operation and ensuring that a correct amount of grease is applied to the main bearing of the decanter centrifuge.

### Summary of the invention

The above object is realized according to a first aspect of the present invention by a method of greasing a decanter centrifuge, the decanter centrifuge comprising a rotating bowl suspended between bearings, each bearing being located in a bearing housing, at least one bearing housing having a grease flow meter, the grease flow meter being connected to a control unit, the control unit defining a specific amount of grease to be injected at each greasing operation and a specific time interval between greasing operations, the method comprising the steps of:
operating the decanter centrifuge by rotating the bowl while measuring an operating time since the last greasing operation in the control unit, and
generating a greasing operation when the operating time of the decanter centrifuge is equal to or exceeds the specific time interval between greasing operations, the greasing operation includes:
   generating a start signal in the control unit,
   measuring an amount of grease injected into the bearing housing by using the flow meter, and
   generating a stop signal in the control unit when the amount of grease injected into the bearing housing is equal to or exceeds the specific amount of grease to be injected at each greasing operation.

The bowl of the decanter centrifuge is typically suspended between two main bearings which support the rotational movement of the bowl. The main bearings can be e.g. ball bearings or roller bearings. Each bearing is encapsulated in a bearing housing. The bearings must be greased in correct intervals with a correct amount of greased to avoid failures.

According to the present invention, the greasing is supported and monitored both in relation to the time interval between greasing operations and the amount of grease applied at each greasing operation. Grease is herein to be understood as a semisolid lubricant, such as fluid lubricant that is mixed with a thickener. The grease is injected into the bearing housing to reduce the friction inside the bearing. However, too much grease in the bearing will lead to elevated temperatures due to the fact that additional grease must be moved around inside the bearing housing and thus heat is generated. During operation the grease is worn out over time, e.g. due to that the fluid lubricant is separated from the thickener. The rate at which the grease is worn out depends on a variety of factors which are closely related to the operating conditions of the bearing. Too long time between greasing operations may lead to that the bearing runs dry, which leads to increased friction. Increase friction will also lead to elevated temperatures. Running at elevated temperatures increases the risk of a mechanical breakdown in the bearing.

To ensure that the correct amount of grease is injected into the bearing housing, the bearing housing has a grease flow meter. The grease flow meter measures the flow of grease into the bearing housing to derive the exact amount of grease injected into the bearing housing at each greasing operation. The injected grease remains within the bearing and is continuously worn out until the next grease injection.

The control unit stores values representing the specific amount of grease to be injected into the bearing housing at each greasing operation and specific time interval between greasing operations. These values can be stored in a memory module of the control unit. The initial values can be derived from experience based on the type and expected operation condition of the bearing. The values can then be constantly modified and optimized over time depending on the actual operating conditions.

When the decanter centrifuge start operating after the bearings have been greased, the operating time is measured. When the operating time is equal to or exceeds the specific time interval between greasing operations which has been stored in the control unit, a greasing operation is initiated. The greasing operation includes generating a start signal in the control unit, being an indication that the bearing should be greased.

The amount of grease injected into the bearing housing is measured using the flow meter. The flow meter can e.g. be a positive displacement meter. This gives an exact value of the amount of grease injected into the bearing housing. When the amount of grease injected into the bearing housing is equal to or exceeds the specific amount of grease to be injected at each greasing operation which has been stored in the control unit, the control unit generates a stop signal. In this way it can be ensured that the bearing is greased at proper intervals and that the amount of grease is correct at each time without having to rely on e.g. the operating time of the grease pump. At the same time the risk of user error is reduced. The start and stop signals can be used to advice the user, or to act as start and stop signals for an automated greasing system.

According to a further embodiment of the first aspect, the bearing housing comprising a temperature sensor and the step of operating of the decanter centrifuge including: measuring a bearing housing temperature by using the temperature sensor.

As stated above, high temperatures can be an indication that too much grease has been injected into the bearing housing or that the grease has been worn out, i.e. the decanter centrifuge has been operated too long time without a greasing operation. High temperature can be e.g. 85-105°C. The temperature measurement can be used to advice the used to change the specific amount of grease to be injected at each greasing operation and/or the specific time interval between greasing operations.

According to a further embodiment of the first aspect, the method comprising the step of setting the specific time interval between greasing operations to less or equal to the operating time since the last greasing operation when between greasing operations the bearing housing temperature increases beyond a first specific temperature, the first temperature being indicative for an under-greasing of the bearing housing.

The first specific temperature may be a high temperature, e.g. 85-105°C, which should not occur during normal operation, but which may occur when the grease is worn out and the friction increases. Increased friction increases the wear of the bearing and may lead to breakdown. The exact temperature is depending on the type and operation of the bearing and can be determined during installation of the bearing or decanter centrifuge. A high temperature occurring during operation is thus indicative for a worn out or dried out bearing and may thus be an indication that a greasing operation should be started. To start a greasing operation and to avoid high temperatures before the next greasing cycle, the value stored for the specific time interval between greasing operations can be set to less or equal to the operating time at which the high temperature occurs.

It should be understood that the step of setting the specific time interval between greasing operations to the operating time since the last greasing operation is performed only after a certain operating time since the last greasing operation has passed in order to ensure that the temperature increase is caused by grease wear-out or dry-out and not over-greasing.

According to a further embodiment of the first aspect, the specific amount of grease to be injected at each greasing operation is increased when between greasing operations the bearing housing temperature increases beyond the first specific temperature.

To ensure proper greasing, in addition to shortening the time interval between greasing operations, also the amount of grease injected at each greasing operation may be increased. The increase may be a certain amount or small percentage, such as between 1% and 5%. The specific amount of grease injected at each greasing operation can in principle go from zero to a very high amount, however, there should be limits imposed such that the specific amount is reasonable and stays within practical limits for the specific decanter centrifuge.

According to a further embodiment of the first aspect, the method comprising the step of generating a stop signal and setting the specific amount of grease to be injected at each greasing operation to less or equal to the amount of grease injected into the bearing housing when during the greasing operation or immediately thereafter the bearing housing temperature increases beyond a second specific temperature, the second specific temperature being indicative for an over-greasing of the bearing housing.

The second specific temperature may be a high temperature, e.g. 85-105°C, which should not occur during normal operation, but which may occur when the bearing is over-greased and the bearing has to move a large amount of excessive grease. Increased temperatures increase the wear of the bearing and may lead to breakdown. The exact temperature is depending on the type and operation of the bearing but can be determined during installation of the bearing or decanter centrifuge. A high temperature occurring during or immediately after a greasing operation may thus be an indication that too much grease has been injected. To stop a greasing operation and to avoid over-greasing in the next greasing operation, the value stored for the specific amount of grease to be injected at each greasing operation can be set to less or equal to the amount of grease injected into the bearing housing.

I should be understood that the step of setting the specific amount of grease to be injected at each greasing operation is performed only during or immediately after the greasing operation, such as in case the bearing temperature constantly increases after the greasing operation, in order to ensure that the temperature increase is caused by over-greasing and not grease wear-out or dry-out.

The first and second high temperatures, high temperature which are indicative for an under greasing and an over greasing, respectively, can be derived in various ways. They can be constant, or they can made depending on the portioning conditions. During high load and/or high rotational velocities, higher temperatures may be considered "normal". They can be made depending on the rise from a measured low temperature during normal operating conditions. Alternatively, the first temperature can be made depending on the rate of rise of the temperature of the bearing housing, i.e. a fast rise in the temperature can be considered worse than a slow increase.

According to a further embodiment of the first aspect, the method comprising the step of increasing the specific time interval between greasing operations when during the greasing operation or immediately thereafter the bearing housing temperature increases beyond the second specific temperature.

In order to ensure proper greasing, in addition to decreasing the amount of grease injected at each greasing operation, also the time interval between each greasing operation may be increased. The increase may be a certain amount or small percentage, such as between 1% and 5%. The time interval between each greasing operation can in principle go from zero to very long time periods, however, there should be limits imposed such that the time interval is reasonable and stays within practical limits for the specific decanter centrifuge.

According to a further embodiment of the first aspect, the decanter centrifuge comprising a grease pump connected to the bearing housing, whereby the start signal causes the pump to start and the stop signal causes the pump to stop.

In this way the greasing operation can be automatic, eliminating the risk of human error.

According to a further embodiment of the first aspect, the bearing housing comprising a grease inlet and the decanter centrifuge comprising a human-machine interface for communicating the start signal and the stop signal to a user.

The human-machine interface may be e.g. a light signal which indicated to the user that the greasing operation should start or stop. The greasing operation itself may be performed by a human using a manual grease pump at the grease inlet.

According to a further embodiment of the first aspect, the bowl is rotating during the greasing operation.

Depending on the type of bearing, the decanter centrifuge can be running during the greasing operation.

According to a further embodiment of the first aspect, the specific amount of grease to be injected at each greasing operation and the specific time interval between greasing operations are based on the size and the operational pattern of the decanter centrifuge. The size of the decanter and the operational pattern may influence the specific amount of grease to be injected at each greasing operation and the specific time interval between greasing operations. In particular the initial values.

According to a further embodiment of the first aspect, each of the bearing housings comprising a separate flow meter connected to the control unit.

For each bearing to be greased optimally, each of the bearing housings comprising a separate flow meter connected to the control unit. In this way, each individual bearing may be optimally greased by measuring the grease injected into each individual bearing. Each bearing housing may also preferably comprise its own temperature sensor for measuring the temperature of each individual bearing.

The above object is realized according to a second aspect of the present invention by a computer program comprising instructions which, when the program is executed by a computer, cause the computer to carry out the method according to the first aspect.

The computer program may be running on the control unit which constitutes the computer or on a separate computer connected to the control unit via a network connection.

The above object is realized according to a third aspect of the present invention by a computer-readable medium having stored thereon the computer program of the second aspect.

The above object is realized according to a fourth aspect of the present invention by a control unit for controlling a greasing operation of a decanter centrifuge, the decanter centrifuge comprising a rotating bowl suspended between bearings, each bearing being located in a bearing housing, at least one bearing housing having a grease flow meter, the grease flow meter being connected to the control unit, the control unit defining a specific amount of grease to be injected at each greasing operation and a specific time interval between greasing operations, the control unit being adapted for measuring an operating time of the decanter centrifuge since the last greasing operation and generating a greasing operation when the operating time of the decanter centrifuge is equal to or exceeds the specific time interval between greasing operations, the greasing operation includes:
generating a start signal in the control unit,
measuring an amount of grease injected into the bearing housing by using the flow meter, and
generating a stop signal in the control unit when the amount of grease injected into the bearing housing is equal to or exceeds the specific amount of grease to be injected at each greasing operation.

The control unit according to the fourth aspect is preferably used for performing the method according to the first aspect and/or running the computer program according to the second aspect.

The above object is realized according to a fifth aspect of the present invention by a decanter centrifuge comprising the control unit according to the fourth aspect.

### Brief description of the drawings

FIG. 1 is a side view of a decanter centrifuge of the present invention.
FIG. 2 is a perspective view of an automatic greasing system of the present invention.
FIG. 3 is a perspective view of a manual greasing system of the present invention.

### Detailed description of the drawings

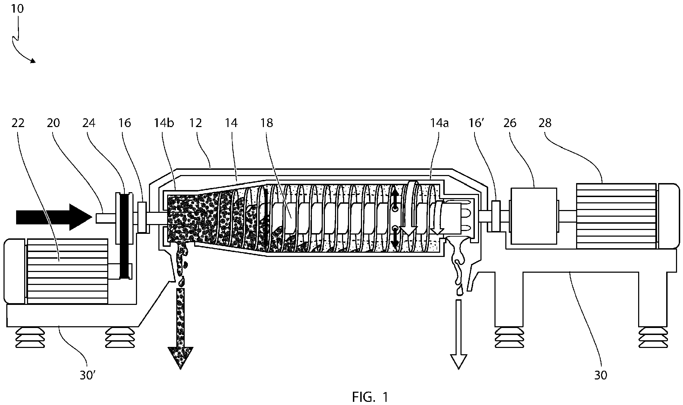

FIG. 1 is a side view of a decanter centrifuge 10 according to the present invention. The decanter centrifuge 10 comprises a casing 12. The casing 12 protects the user from a rotating bowl 14 below the casing 12. The rotating bowl 14 extending between a large hub 14a and a small hub 14b. The bowl 14 is rotationally supported by two opposite bearings (not visible) inside respective bearing housings 16 16', one at the large hub 14a and one at the small hub 14b. A screw conveyor 18 is located inside the bowl 14. The starting material is injected into the bowl 14 via a feed inlet channel 20 extending inside the conveyor screw 18, as shown by the filled arrows. The starting material is separated into a light phase (liquids) exiting at the large end hub 14a as shown by the white arrow and a heavy phase (solids) exiting at the small end hub 14b as shown by the dotted arrow.

The bowl 14 is driven by a motor 22 via a belt 24. By the rotation of the bowl 14, the light phase and the heavy phase are separated into layers inside the bowl. The screw conveyor 18 is driven at a differential speed relative to the bowl 14 via a gearbox 26. The differential speed between the bowl 14 and the screw 18 causes the screw conveyor 18 to convey the heavy phase toward the small end hub 14b. The differential speed is set by a back-drive motor 28 which is coupled to the gearbox 26.

The back-drive motor 28, gearbox 26 and bearing 16' are held up by a first frame 30 whereas the main motor 22, the belt 24 and the bearing 16 are held by a second frame 30'.

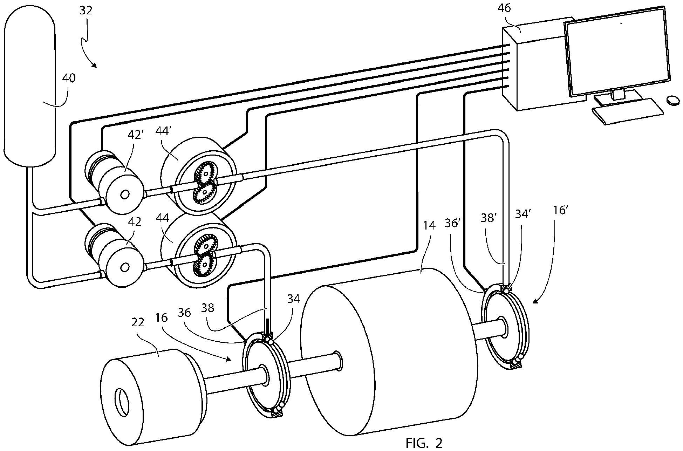

FIG. 2 is a perspective view of an automatic greasing system 32 according to the present invention. The bowl 14 is rotationally supported by two opposite bearings 34 34' inside a respective hearing housing 16 16'. The bearings 34 34' can be ball bearings, roller bearings or the like. The temperature inside each of the bearing housings 34 34' is measured by a respective temperature sensor 36 36'. Each bearing housing 16 16' is lubricated by a respective grease tube 38 38'

The grease is stored in a tank 40. The tank 40 is connected to each of the grease tubes 38 38' via a respective grease pump 42 42' and grease flow meter 44 44'. The grease flow meter 44 44' is in the present case a positive displacement meter. The temperature sensors 36 36', the pumps 42 42' and the grease flow meters 44 44' are connected to a control unit 46, such as a computer.

The control unit 46 stores values for each bearing 34 34' for defining a specific amount of grease to be injected at each greasing operation and a specific time interval between greasing operations. The operating time since the last greasing operation of each bearing 34 34' of the decanter centrifuge 10 is measured. When the operating time since the last greasing operation of one of the bearings 34 34' of the decanter centrifuge 10 is equal to or exceeds the specific time interval between greasing operations for that particular bearing of the bearings 34 34', a greasing operation is started for that particular bearing. A start signal for the particular bearing of the bearings 34 34' is generated in the control unit 46. The particular pump of the pumps 42 42' connected to the particular grease tube of the grease tubes 38 38' is started and the amount of grease injected into the particular bearing housing is measured by using the relevant flow meter of the flow meters 44 44'.

When the amount of grease injected into the particular bearing housing is equal to or exceeds the specific amount of grease to be injected at each greasing operation for the particular bearing of the bearings 34 34', a stop signal is generated for the particular bearing of the bearings 34 34' and the particular pump of the pumps 42 42' is stopped.

The temperature in each of the bearing housings 16 16' is constantly measured. In case the temperature is increasing in a particular bearing housing of the bearing housings 16 16' during or immediately after a greasing operation, it is an indication for an over-greasing of the particular bearing of the bearings 34 34'. If that is the case, the greasing operation is stopped, the amount of grease injected into the particular bearing housing of the bearing housings 16 16' is reduced and, optionally, the specific time interval between greasing operations for that particular bearing of the bearings 34 34' is increased.

However, in case the temperature is increasing in a particular bearing housing of the bearing housings 16 16' between greasing operations, it is an indication for an under-greasing. Then the greasing operation is started, the specific time interval between greasing operations for that particular bearing of the bearings 34 34' is decreased and, optionally, the amount of grease injected into the particular bearing housing is increased.

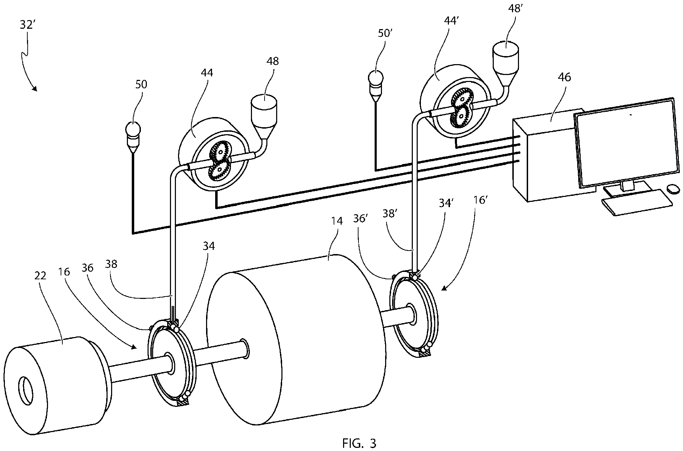

FIG. 3 is a perspective view of a manual greasing system 32' of the present invention. The manual greasing system 32' is similar to the automatic greasing system above, except that the grease pumps have been replaced by a respective grease flow inlet 48 48' for each of the bearings 34 34'. The start signal and the stop signal for each bearing 34 34' is determined in the same way as in the automatic greasing system above, however, instead of causing the respective grease pumps to start and stop, the start signal and the stop signal causes a respective visual indication 50 50' for each bearing 34 34' to indicate that a greasing operation should start or stop, respectively. The visual indications 50 50' act as human-machine interface, however, alternative human-machine interfaces are possible such as sound indications or various kinds of messages using telecommunication networks or computer networks.

The visual indication 50 50' guides the user to start a manual greasing operation by applying a manually controlled grease pump to the particular inlet 48 48' which visual indication 50 50' indicated that a greasing operation should start. The user applies grease until the particular visual indication 50 50' indicates that the greasing operation should stop. Then, the user stops the greasing operation and awaits the next indication that a greasing operation should start. The grease flow into each bearing housing 16 16' and the temperature of each bearing housing 16 16' is measured in the same way as in the automatic greasing system above. The specific amount of grease to be injected at each greasing operation and the specific time interval between greasing operations are also determined by the control unit/computer 46 in the same way as in the automatic greasing system above.

The systems and methods according to the present invention mainly concerns the main bearings of the decanter centrifuge, i.e. the bearings which rotationally support the bowl, however, the auxiliary bearings which support e.g. the screw, can also use the systems and methods.

## Claims

1. A method of greasing a decanter centrifuge, the decanter centrifuge comprising a rotating bowl suspended between bearings, each bearing being located in a bearing housing, at least one bearing housing having a grease flow meter, the grease flow meter being connected to a control unit, the control unit defining a specific amount of grease to be injected at each greasing operation and a specific time interval between greasing operations, the method comprising the steps of:
operating the decanter centrifuge by rotating the bowl while measuring an operating time since the last greasing operation in the control unit, and
generating a greasing operation when the operating time of the decanter centrifuge is equal to or exceeds the specific time interval between greasing operations, the greasing operation includes:
generating a start signal in the control unit,
measuring an amount of grease injected into the bearing housing by using the flow meter, and
generating a stop signal in the control unit when the amount of grease injected into the bearing housing is equal to or exceeds the specific amount of grease to be injected at each greasing operation.

2. The method according to claim 1, wherein the bearing housing comprising a temperature sensor and the step of operating of the decanter centrifuge including: measuring a bearing housing temperature by using the temperature sensor.

3. The method according to claim 2, wherein the method comprising the step of setting the specific time interval between greasing operations to less or equal to the operating time since the last greasing operation when between greasing operations the bearing housing temperature increases beyond a first specific temperature, the first temperature being indicative for an under-greasing of the bearing housing.

4. The method according to claim 3, wherein the specific amount of grease to be injected at each greasing operation is increased when between greasing operations the bearing housing temperature increases beyond the first specific temperature.

5. The method according to any of the claims 2 - 4, wherein the method comprising the step of generating a stop signal and setting the specific amount of grease to be injected at each greasing operation to less or equal to the amount of grease injected into the bearing housing when during the greasing operation or immediately thereafter the bearing housing temperature increases beyond a second specific temperature, the second specific temperature being indicative for an over-greasing of the bearing housing.

6. The method according to claim 5, wherein the method comprising the step of increasing the specific time interval between greasing operations when during the greasing operation or immediately thereafter the bearing housing temperature increases beyond the second specific temperature.

7. The method according to any of the preceding claims, wherein the decanter centrifuge comprising a grease pump connected to the bearing housing, whereby the start signal causes the pump to start and the stop signal causes the pump to stop.

8. The method according to any of the preceding claims, wherein the bearing housing comprising a grease inlet and the decanter centrifuge comprising a human-machine interface for communicating the start signal and the stop signal to a user.

9. The method according to any of the preceding claims, wherein the bowl is rotating during the greasing operation.

10. The method according to any of the preceding claims, wherein the specific amount of grease to be injected at each greasing operation and the specific time interval between greasing operations are based on the size and the operational pattern of the decanter centrifuge.

11. The method according to any of the preceding claims, wherein each of the bearing housings comprising a separate flow meter connected to the control unit.

12. A computer program comprising instructions which, when the program is executed by a computer, cause the computer to carry out the method of any of the claim 1-11.

13. A computer-readable medium having stored thereon the computer program of claim 12.

14. A control unit for controlling a greasing operation of a decanter centrifuge, the decanter centrifuge comprising a rotating bowl suspended between bearings, each bearing being located in a bearing housing, at least one bearing housing having a grease flow meter, the grease flow meter being connected to the control unit, the control unit defining a specific amount of grease to be injected at each greasing operation and a specific time interval between greasing operations, the control unit being adapted for measuring an operating time of the decanter centrifuge since the last greasing operation and generating a greasing operation when the operating time of the decanter centrifuge is equal to or exceeds the specific time interval between greasing operations, the greasing operation includes:
generating a start signal in the control unit,
measuring an amount of grease injected into the bearing housing by using the flow meter, and
generating a stop signal in the control unit when the amount of grease injected into the bearing housing is equal to or exceeds the specific amount of grease to be injected at each greasing operation.

15. A decanter centrifuge comprising the control unit according to claim 14.
